# EUROPÄISCHE PATENTSCHRIFT

(11) **EP 3 036 453 B1**
(45) Veröffentlichungstag und Bekanntmachung des Hinweises auf die Patenterteilung: **26.02.2020**
(21) Anmeldenummer: 14744117.4
(22) Anmeldetag: 28.07.2014
(51) Int. Cl.: F16H 3/00, F16H 3/093

(54) **DOPPELKUPPLUNGSGETRIEBE FÜR EIN KRAFTFAHRZEUG**
DUAL CLUTCH TRANSMISSION FOR A MOTOR VEHICLE
TRANSMISSION À DOUBLE EMBRAYAGE POUR VÉHICULE AUTOMOBILE

(30) Priorität: 19.08.2013 DE 102013216385
(43) Veröffentlichungstag der Anmeldung: 29.06.2016
(73) Patentinhaber: Volkswagen Aktiengesellschaft, 38440 Wolfsburg (DE)
(72) Erfinder: MÜLLER, Frank, 38165 Essenrode (DE); VOIGT, Arne, 38440 Wolfsburg (DE); LEY, Michael, 39397 Schwanebeck (DE); VÖGE, Wolfgang, 38110 Braunschweig (DE)
(86) Internationale Anmeldenummer: PCT/EP2014/066146
(87) Internationale Veröffentlichungsnummer: WO 2015/024737

(56) Entgegenhaltungen:
- WO-A1-2012/084250
- DE-A1-102011 016 661

## Beschreibung

Die Erfindung betrifft ein Doppelkupplungsgetriebe für ein Kraftfahrzeug mit den Merkmalen des Oberbegriffes des Patentanspruches 1.

Es sind Doppelkupplungsgetriebe mit zwei Getriebeeingangswellen, zwei Triebwellen und mehreren Zahnrädern bekannt, wobei die Zahnräder mehrere Doppelradebenen bilden.

Aus der DE 10 2009 002 357 A1 ist ein Doppelkupplungsgetriebe für ein Kraftfahrzeug, mit zwei Reibkupplungen, zwei Getriebeeingangswellen und zwei Triebwellen sowie mehreren Synchronisiervorrichtungen bekannt. Die erste Getriebeeingangswelle ist über die erste Reibkupplung und die zweite Getriebeeingangswelle ist über die zweite Reibkupplung mit einem Antriebsmotor verbindbar beziehungsweise verbunden. Jeder der Getriebeeingangswellen sind drei Festräder zugeordnet. Der einen Triebwelle sind sechs Losräder und der anderen Triebwelle sind zwei Losräder zugeordnet. Die der äußeren, zweiten Getriebeeingangswelle zugeordneten beiden äußeren Festräder kämmen dabei mit zwei Losrädern auf den beiden Triebwellen und/oder einem Zwischenrad und bilden daher zwei Doppelradebenen. Zur Realisierung eines Rückwärtsganges ist in der einen Doppelradebene das Zwischenrad zwischengeschaltet zur Drehumkehrung und damit zur Realisierung eines Rückwärtsganges. Die entsprechenden Synchronisiervorrichtungen sind auf den Triebwellen angeordnet. Das Doppelkupplungsgetriebe weist acht Vorwärtsgänge auf und ist für eine Frontquerbauweise in einem Kraftfahrzeug geeignet. Die Vorwärtsgänge sind lastschaltbar.

Aus der DE 10 2009 002 348 A1 ist ein ähnliches Doppelkupplungsgetriebe mit ebenfalls zwei Doppelradebenen und insgesamt sechs Radebenen bekannt. Auch bei diesem Doppelkupplungsgetriebe sind acht Vorwärtsgänge mit mindestens sieben lastschaltbaren Vorwärtsgängen vorgesehen. Das Doppelkupplungsgetriebe eignet sich für eine Frontquerbauweise in einem Kraftfahrzeug.

Aus der DE 10 2007 049 265 A1 ist ein Doppelkupplungsgetriebe mit zwei Reibkupplungen, zwei Getriebeeingangswellen und zwei Triebwellen bekannt. Jeder der Getriebeeingangswellen sind zwei Festräder zugeordnet, wobei entsprechende, kämmende Losräder auf den Triebwellen angeordnet sind. Es sind insgesamt vier doppelt wirkende Synchronisiervorrichtungen zwischen jeweils benachbarten Losrädern auf den Triebwellen angeordnet. Hierdurch sind vier Doppelradebenen realisiert. Es ergeben sich mindestens acht lastschaltbare Vorwärtsgänge und zumindest ein Rückwärtsgang.

Aus der WO 2012/055382 A1 ist ein Doppelkupplungsgetriebe für Front-Quer-Anwendungen bekannt. Es sind zwei Reibkupplungen, zwei Getriebeeingangswellen und zwei Triebwellen vorgesehen. Auf der zweiten, äußeren Getriebeeingangswelle ist eine weitere Hohlwelle derart angeordnet, dass sich die beiden Getriebeeingangswellen und die weitere Hohlwelle koaxial zueinander erstrecken. Auf der weiteren Hohlwelle sind zwei Festräder angeordnet. Die weitere Hohlwelle lässt sich über eine Synchronisiervorrichtung drehfest mit der äußeren Getriebeeingangswelle verbinden. Die innere und die äußere Getriebeeingangswelle verfügen zudem über jeweils ein Festrad. Hierdurch ergeben sich insgesamt vier Radebenen, die als Doppelradebenen ausgebildet sind. Auf einer der Triebwellen ist dabei eine Hohlwelle gelagert, wobei die Hohlwelle über eine Synchronisiervorrichtung mit der Triebwelle drehfest verbindbar ist. Auf der Hohlwelle ist ein Festrad und ein Losrad angeordnet. Bei diesem Doppelkupplungsgetriebe sind mehrere Windungsgänge realisierbar, wobei sich acht beziehungsweise neun lastschaltbare Vorwärtsgänge realisieren lassen. Die Stufensprünge der Übersetzung der ersten sechs Vorwärtsgänge sind dabei abnehmend ausgebildet.

Aus der gattungsbildenden WO 2012/084250 A1 ist ein Doppelkupplungsgetriebe bekannt, bei dem genau eine Doppelradebene mit drei als Losrädern ausgebildeten Zahnrädern vorgesehen ist. Den beiden Triebwellen ist jeweils mindestens eine Hohlwelle zugeordnet, wobei auf mindestens einer der Hohlwellen mindestens ein als Losrad ausgebildetes Zahnrad lose angeordnet ist. Auf dieser Hohlwelle ist eine Kopplungsvorrichtung angeordnet, so dass das Losrad mit der Hohlwelle drehfest verbindbar ist. Mittels einer weiteren Kopplungsvorrichtung ist die Hohlwelle drehfest mit der entsprechenden Triebwelle verbindbar. Auf einer der Triebwellen sind zwei koaxial angeordnete Hohlwellen angeordnet, wobei die innere Hohlwelle über eine Kopplungsvorrichtung mit der Triebwelle drehfest verbindbar ist. Auf der inneren und der äußeren Hohlwelle ist jeweils drehfest ein Zahnrad angeordnet.

Diese gattungsbildenden Doppelkupplungsgetriebe sind noch nicht optimal ausgebildet. Insbesondere hinsichtlich der Übersetzungsstufen zwischen den einzelnen Vorwärtsgängen sind die gattungsbildenden Doppelkupplungsgetriebe noch nicht optimal ausgebildet. Wünschenswert ist insbesondere, eine progressive Übersetzungsstufung näherungsweise bereitzustellen.

Der Erfindung liegt daher die Aufgabe zugrunde, das eingangs genannte Doppelkupplungsgetriebe derart auszugestalten und weiterzubilden, so dass ein kompakt bauendes Doppelkupplungsgetriebe mit insbesondere einer abnehmenden, insbesondere näherungsweise progressiven Übersetzungsstufung bereitgestellt ist.

Diese der Erfindung zugrunde liegende Aufgabe wird nun durch ein Doppelkupplungsgetriebe mit den Merkmalen des Patentanspruches 1 gelöst. Der Leistungsfluss mindestens eines Windungsganges windet sich über die Doppelradebene. Einer Hohlwelle sind vorzugsweise mindestens zwei Zahnradpaare zugeordnet, wobei das eine Zahnradpaar der inneren Getriebeeingangswelle und das andere Zahnradpaar der äußeren Getriebeeingangswelle zugeordnet ist. Hierdurch ist ein Windungsgang über diese Hohlwelle realisierbar. Auf der äußeren Hohlwelle ist ein als Losrad ausgebildetes Zahnrad angeordnet, wobei dieses Zahnrad über eine weitere Kopplungsvorrichtung drehfest mit der äußeren Hohlwelle verbindbar ist, und wobei die beiden Hohlwellen über diese Kopplungsvorrichtung drehfest miteinander verbindbar sind. Es sind insbesondere sechs Radebenen mit fünf Zahnradstufen und der einen Doppelradebene mit den drei Losrädern vorgesehen. Jede der Getriebeeingangswellen weist mindestens ein als Losrad ausgebildetes Zahnrad und jeweils mindestens eine Kopplungsvorrichtung zur Verbindung des mindestens einen Losrads mit der entsprechenden Getriebeeingangswelle auf. Jeder der Getriebeeingangswelle sind vorzugsweise drei Zahnräder zugeordnet, vorzugsweise zwei Losräder und ein Festrad. Zwischen den beiden Losrädern ist jeweils eine Kopplungsvorrichtung angeordnet. Mindestens einer der Triebwellen ist ein Parksperrenrad zugeordnet. Zur Realisierung eines Rückwärtsganges ist eine Zwischenwelle mit einem Zahnrad vorgesehen, wobei dieses Zahnrad mit einem der Zahnräder auf einer der Triebwellen kämmend angeordnet ist. Jeder der Triebwellen ist ein Abtriebsritzel zugeordnet, wobei die Abtriebsritzel vorzugsweise unterschiedliche Größen aufweisen. Es sind zehn Vorwärtsgänge vorgesehen. Zumindest der erste und der zehnte Vorwärtsgang und insbesondere ein weiterer Vorwärtsgang sind als Windungsgang ausgebildet. Die zehn Vorwärtsgänge weisen eine näherungsweise progressive Übersetzungsstufe auf. Dadurch, dass das Doppelkupplungsgetriebe kurz bauend ist, ist es insbesondere für einen Frontquer-Einbau geeignet. Mindestens eine der Kopplungsvorrichtungen kann als eine Synchronisiervorrichtung realisiert werden, in einer vorteilhafte Variante sind alle Kopplungsvorrichtungen als Synchronisiervorrichtung realisiert. Die eingangs genannten Nachteile sind daher vermieden und entsprechende Vorteile sind erzielt.

Es gibt nun eine Vielzahl von Möglichkeiten, das erfindungsgemäße Doppelkupplungsgetriebe in vorteilhafter Art und Weise auszugestalten und weiterzubilden. Hierfür darf zunächst auf die dem Patentanspruch 1 nachgeordneten Patentansprüche verwiesen werden. Im Folgenden werden zwei bevorzugte Ausgestaltungen des Doppelkupplungsgetriebes anhand der Zeichnung und der dazugehörigen Beschreibung näher erläutert.

In der Zeichnung zeigt:
- Fig. 1: in einer schematischen Darstellung ein erstes Doppelkupplungsgetriebe,
- Fig. 2: in einer Tabelle ein Schaltschema des ersten Doppelkupplungsgetriebes zur Realisierung von zehn Vorwärtsgängen und einem Rückwärtsgang,
- Fig. 3: in einer schematischen Darstellung ein zweites Doppelkupplungsgetriebe und
- Fig. 4: in einer Tabelle ein Schaltschema des ersten Doppelkupplungsgetriebes zur Realisierung von zehn Vorwärtsgängen und einem Rückwärtsgang des zweiten Doppelkupplungsgetriebes.

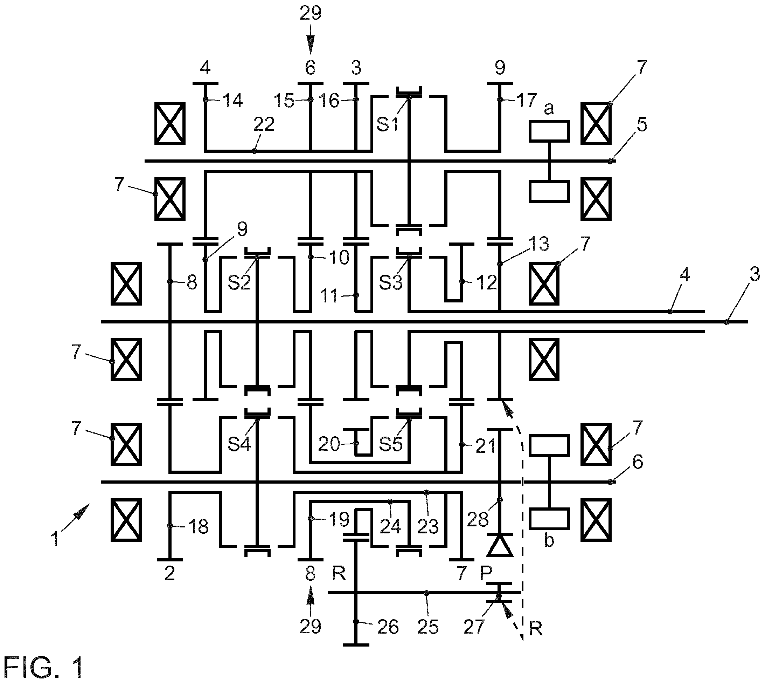

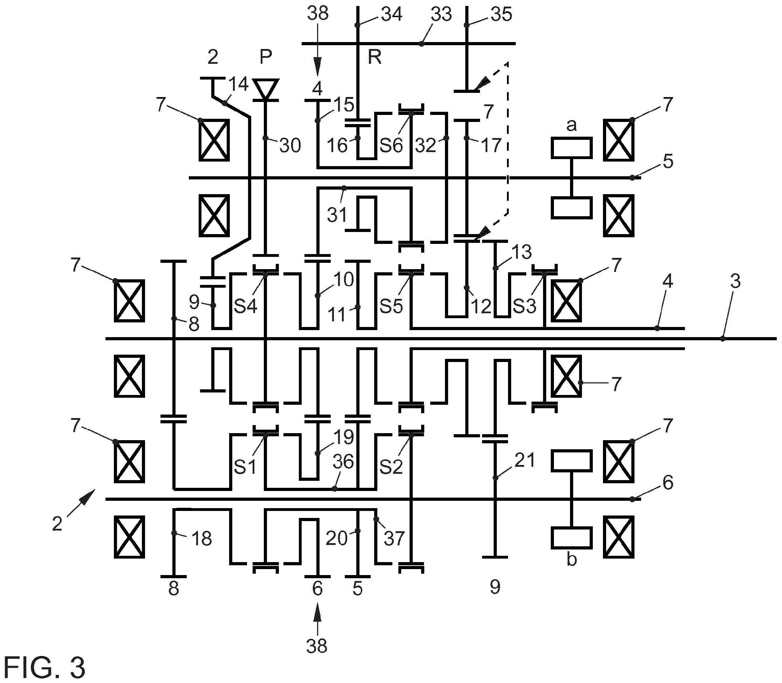

In den Fig. 1 und 3 sind zwei Doppelkupplungsgetriebe 1, 2 für ein nicht dargestelltes Kraftfahrzeug gut zu erkennen. Es werden zunächst im wesentlichen die Gemeinsamkeiten mit Erwähnung einiger Unterschiede der Doppelkupplungsgetriebe 1, 2 unter Verwendung von gleichen Bezugszeichen beschrieben, danach werden die Unterschiede der Doppelkupplungsgetriebe 1, 2 explizit beschrieben.

Die Doppelkupplungsgetriebe 1, 2 weisen jeweils eine erste, innere Getriebeeingangswelle 3 und eine zweite, äußere Getriebeeingangswelle 4 auf. Die beiden Getriebeeingangswellen 3, 4 sind koaxial zueinander angeordnet. Die Getriebeeingangswelle 4 ist hohl ausgebildet. Die Getriebeeingangswelle 3 erstreckt sich innerhalb der Getriebeeingangswelle 4. Die Getriebeeingangswelle 3 kann als Vollwelle oder alternativ als Hohlwelle ausgebildet sein. In bevorzugter Ausgestaltung ist die Getriebeeingangswelle 3 als Vollwelle ausgebildet.

Ferner weisen die beiden Doppelkupplungsgetriebe 1, 2 jeweils zwei Triebwellen 5, 6 auf. Die Triebwellen 5, 6 sind parallel zu den konzentrisch angeordneten Getriebeeingangswellen 3, 4 angeordnet. Die Getriebeeingangswellen 3, 4 sind jeweils über Zahnradpaarungen beziehungsweise Zahnradstufen mit den Triebwellen 5, 6 verbunden beziehungsweise verbindbar.

Die Getriebeeingangswelle 3, die Getriebeeingangswelle 4 sowie die beiden Triebwellen 5, 6 sind jeweils über Lager 7 gelagert.

Es sind nun mehrere Zahnräder vorgesehen:
Der ersten Getriebeeingangswelle 3 sind drei Zahnräder zugeordnet, nämlich ein mittleres Zahnrad 9 und ein kupplungsnahes Zahnrad 10. Die Begriffe "kupplungsnah" und "kupplungsfern" werden hier im Bezug zu benachbarten Zahnrädern verwendet, um auszudrücken, ob die Zahnräder in den Fig. 1 und 3 jeweils links oder rechts voneinander, das heißt entweder kupplungsfern oder kupplungsnah zu den Reibkupplungen angeordnet sind.

Das kupplungsferne Zahnrad 8 ist als Festrad ausgebildet. Das mittlere Zahnrad 9 und das kupplungsnahe Zahnrad 10 sind als Losräder ausgebildet. Zwischen dem mittleren und dem kupplungsnahen Zahnrad 9, 10 ist jeweils eine Kopplungsvorrichtung S2 (vgl. Fig. 1) beziehungsweise S4 (vgl. Fig. 3) angeordnet. Diese dazwischen angeordnete Kopplungsvorrichtung S2 beziehungsweise S4 ist doppelt wirkend ausgebildet. Mittels der Kopplungsvorrichtung S2 bzw. S4 sind die Losräder in Form der Zahnräder 9, 10 drehfest mit der inneren Getriebeeingangswelle 3 verbindbar.

Der zweiten Getriebeeingangswelle 4 sind ebenfalls drei Zahnräder zugeordnet, nämlich ein kupplungsfernes Zahnrad 11, ein mittleres Zahnrad 12 und ein kupplungsnahes Zahnrad 13. Zwischen den beiden als Losrädern ausgebildeten Zahnrädern 11, 12 ist jeweils eine Kopplungsvorrichtung S3 (vgl. Fig. 1) beziehungsweise S5 (vgl. Fig. 3) angeordnet. Das kupplungsferne Zahnrad 11 ist zwar auf der inneren Getriebeeingangswelle 3 angeordnet bzw. drehbar gelagert, ist jedoch über die Kopplungsvorrichtung S3 beziehungsweise S5 drehfest mit der äußeren Getriebeeingangswelle 4 verbindbar und daher der äußeren Getriebeeingangswelle 4 zugeordnet. Das kupplungsnahe Zahnrad 13 ist im Fall des Doppelkupplungsgetriebes 1 als Festrad ausgebildet und im Fall des Doppelkupplungsgetriebes 2 als Losrad. Zwischen dem kupplungsnahen Zahnrad 13 und dem entsprechenden Lager 7 ist hierbei eine weitere Kopplungsvorrichtung S3 (vgl. Fig. 3) zur Verbindung des als Losrad ausgebildeten Zahnrades 13 mit der äußeren Getriebeeingangswelle 4 angeordnet.

Der ersten Triebwelle 5 sind vier Zahnräder 14, 15, 16, 17 zugeordnet. Der zweiten Triebwelle 6 sind die Zahnräder 18, 19, 20, 21 zugeordnet. Das Zahnrad 18 ist als Losrad ausgebildet und kämmt mit dem kupplungsfernen Zahnrad 8 auf der ersten Getriebeeingangswelle 3. Das Zahnrad 18 ist über die Kopplungsvorrichtung S4 (vgl. Fig. 1) beziehungsweise S1 (vgl. Fig. 3) drehfest mit der zweiten Triebwelle 6 bzw. mit der Hohlwelle 36 verbindbar. Das Zahnrad 19 kämmt mit dem kupplungsnahen Zahnrad 10 auf der ersten Getriebeeingangswelle 3.

Im folgenden darf auf das Doppelkupplungsgetriebe 1 näher anhand von Fig. 1 eingegangen werden.

Die drei, der ersten Triebwelle 5 zugeordneten, kupplungsfernen, benachbarten Zahnräder 14, 15, 16 sind auf einer Hohlwelle 22 drehfest angeordnet. Die Hohlwelle 22 ist über eine kupplungsnah dieser drei Zahnräder 14, 15, 16 angeordneten Kopplungsvorrichtung S1 drehfest mit der ersten Triebwelle 5 verbindbar. Die Kopplungsvorrichtung S1 ist doppelt wirkend ausgebildet. Das kupplungsnahe Zahnrad 17 ist als Losrad ausgebildet und ebenfalls mittels der Kopplungsvorrichtung S1 lösbar mit der Triebwelle 5 verbindbar.

Der ersten Triebwelle 5 ist ein Abtriebsritzel a und der zweiten Triebwelle 6 ist ein Abtriebsritzel b kupplungsnah der Zahnräder 14, 15, 16, 17 zugeordnet. Die Zahnräder 14 und 9 bilden eine Zahnradstufe für ein vierten Vorwärtsgang. Die Zahnräder 15 und 10 bilden eine Zahnradstufe für einen sechsten Vorwärtsgang. Die Zahnräder 16 und 11 bilden eine Zahnradstufe für einen dritten Vorwärtsgang. Die Zahnräder 17 und 13 bilden eine Zahnradstufe für einen neunten Vorwärtsgang.

Das auf der zweiten Triebwelle 6 kupplungsfern angeordnete Zahnrad 18 kämmt mit dem kupplungsfernen Zahnrad 8 auf der ersten Getriebeeingangswelle 3 und bildet ein Zahnradpaar für einen zweiten Vorwärtsgang. Auf der zweiten Triebwelle 6 sind zwei koaxial zueinander angeordnete Hohlwellen 23, 24 angeordnet. Die innere Hohlwelle 23 ist drehfest mit dem kupplungsnahen Zahnrad 21 verbunden. Auf der inneren Hohlwelle 23 ist die äußere Hohlwelle 24 angeordnet. Die äußere Hohlwelle 24 ist drehfest mit der Kopplungsvorrichtung S5 und dem Zahnrad 19 verbunden. Auf der äußeren Hohlwelle 24 ist das als Losrad ausgebildetes Zahnrad 20 angeordnet. Das Zahnrad 20 kann über die Kopplungsvorrichtung S5 drehfest mit der äußeren Hohlwelle 24 und somit mit dem Zahnrad 19 verbunden werden. Das Zahnrad 19 kämmt mit dem Zahnrad 10 auf der ersten Getriebeeingangswelle 3 und bildet eine Zahnradstufe für einen achten Vorwärtsgang. Das Zahnrad 21 kämmt mit dem Zahnrad 12 auf der äußeren Getriebeeingangswelle 4 und bildet eine Zahnradstufe für den siebten Vorwärtsgang.

Parallel zu der zweiten Triebwelle 6 ist eine Zwischenwelle 25 mit zwei weiteren Zahnrädern 26, 27 angeordnet. Das Zahnrad 26 kämmt mit dem Zahnrad 20 und bildet eine Zahnradstufe, wobei diese Zahnradstufe einem Rückwärtsgang zugeordnet ist. Das Zahnrad 27 kämmt mit dem Zahnrad 13 auf der äußeren Getriebeeingangswelle 4. Die beiden Zahnräder 21 und 12 bilden eine Zahnradstufe, die einem siebten Vorwärtsgang zugeordnet ist. Kupplungsnah des Zahnrades 21 ist ferner ein Parksperrenrad 28 auf der zweiten Triebwelle 6 angeordnet. Kupplungsnah des Parksperrenrades 28 ist das Abtriebsritzel b angeordnet.

Die Vorwärtsgänge 2, 3, 4, 6, 7, 8 und 9 sind nicht als Windungsgang ausgebildet. Die Vorwärtsgänge eins, fünf und zehn sind als Windungsgänge ausgebildet, wobei sich ein Leistungsfluss des Windungsganges über mehrere Zahnradstufen windet. Bei der Schaltung des Rückwärtsganges sind die Zahnradstufen des zweiten und achten Vorwärtsganges beteiligt. Zu der Schaltung des ersten Vorwärtsganges sind die Zahnradstufen des zweiten, dritten und vierten Vorwärtsganges beteiligt. Zur Schaltung des fünften Vorwärtsganges sind die Zahnradstufen des sechsten, siebten und achten Vorwärtsganges beteiligt. Zur Schaltung des zehnten Vorwärtsganges sind die Zahnradstufen des achten, neunten und siebten Vorwärtsganges beteiligt.

Das Doppelkupplungsgetriebe 1 weist zehn Vorwärtsgänge auf. Das Doppelkupplungsgetriebe ist derart kurz bauend, so dass es in Kraftfahrzeugen in einer Front-Quereinbaulage verbaubar ist. Jeder der beiden Triebwellen 5, 6 ist ein Abtriebsritzel a, b (vgl. Fig. 1 und Fig. 3) zugeordnet, wobei die beiden Abtriebsritzel a, b unterschiedliche Größen aufweisen. Hierdurch ist eine progressive Übersetzungsstufung ermöglicht.

Die eingangs genannten Nachteile sind nun dadurch vermieden, dass genau eine Doppelradebene 29 bzw. 38 vorgesehen ist. Diese Doppelradebene 29 bzw. 38 weist die Zahnräder 15, 10 und 19 auf. Die Zahnräder 15, 10 und 19 sind mittels der Kopplungsvorrichtungen S1, S2 drehfest mit der Triebwelle 5 beziehungsweise der inneren Getriebeeingangswelle 3 koppelbar (vgl. Fig. 1). Das Zahnrad 19 ist mittels der Kopplungsvorrichtung S5 drehfest mit dem Zahnrad 20 oder mit der inneren Hohlwelle 23 koppelbar (vgl. Fig. 1).

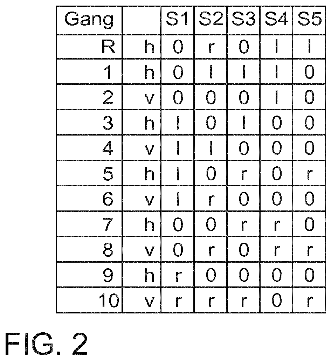

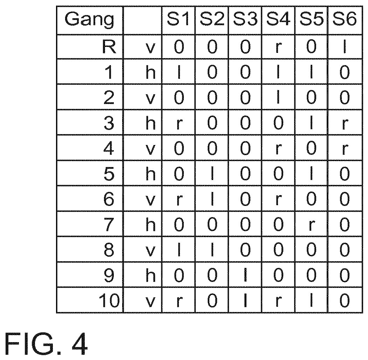

Im folgenden darf auf die Schaltung der einzelnen Vorwärtsgänge und des Rückwärtsganges des Doppelkupplungsgetriebes 1 anhand von den Fig. 1 und Fig. 2 näher eingegangen werden. Bzgl. der Darstellungen in den Fig. 2 und 4 der Schaltstellungen für die Kopplungsvorrichtungen S1 bis S6, also die Darstellung der Fig. 2 und 4 darf ausgeführt werden, dass die "0" eine Neutralstellung, ein "r" eine Schaltstellung nach rechts, ein "l" eine Schaltstellung nach links symbolisieren soll, wobei mit dem Zeichen "h" die zweite, äußere Eingangswelle 4 und mit dem Zeichen "v" die innere, erste Getriebeeingangswelle 3 bezeichnet sein soll.

Zur Schaltung des Rückwärtsganges wird der Leistungsfluss über die äußere Getriebeeingangswelle 4 übertragen. Die Kopplungsvorrichtungen S1 und S3 sind in einer Neutralstellung angeordnet. Die Kopplungsvorrichtung S2 ist in der rechten, kupplungsnahen Schaltstellung angeordnet und verbindet somit das Zahnrad 10 drehfest mit der inneren Getriebeeingangswelle 3. Die Kopplungsvorrichtungen S4 und S5 sind in der linken, kupplungsfernen Schaltstellung angeordnet. Der Leistungsfluss wird von der äußeren Getriebeeingangswelle 4 auf das entsprechende Festrad, nämlich das Zahnrad 13, das kämmend mit dem Zahnrad 13 angeordnete Zahnrad 27 auf der Zwischenwelle 25, das entsprechende Zahnrad 26 und somit das kämmend dazu angeordnete Zahnrad 20 auf der zweiten Triebwelle 6 übertragen. Die Kopplungsvorrichtung S5 überträgt den Leistungsfluss nun auf die äußere Hohlwelle 24 und damit auf das Zahnrad 19 und 10 der dem achten Vorwärtsgang zugeordneten Zahnradstufe. Da die Kopplungsvorrichtung S2 den Leistungsfluss auf die innere Getriebeeingangswelle 3 überträgt, wird nun das Festrad 8 und das damit kämmende Zahnrad 18 der Zahnradstufe des zweiten Vorwärtsganges angetrieben. Über die Kopplungsvorrichtung S4 wird der Leistungsfluss auf die zweite Triebwelle 6 und damit an das Abtriebsritzel b übertragen.

Wenn der erste Vorwärtsgang eingelegt ist, wird der Leistungsfluss ebenfalls über die äußere Getriebeeingangswelle 4 übertragen. Die Kopplungsvorrichtungen S1 und S5 befinden sich in einer Neutralstellung. Die Kopplungsvorrichtungen S2, S3, S4 befinden sich in der linken, kupplungsfernen Schaltstellung. Der Leistungsfluss wird von der äußeren Getriebeeingangswelle 4 auf die Kopplungsvorrichtung S3, auf die dem dritten Vorwärtsgang zugeordnete Zahnradstufe mit den Zahnrädern 11 und 16 übertragen. Über die Hohlwelle 22 wird der Leistungsfluss auf die dem vierten Vorwärtsgang zugeordnete Zahnradstufe mit den Zahnrädern 14 und 9 übertragen. Über die Kopplungsvorrichtung S2 wird der Leistungsfluss an das Zahnrad 8 und das dazu kämmende Zahnrad 18 der Zahnradstufe des zweiten Vorwärtsganges übertragen. Über die geschlossene Kopplungsvorrichtung S4 wird der Leistungsfluss an die zweite Triebwelle 6 übertragen.

Zur Schaltung des zweiten Vorwärtsganges wird der Leistungsfluss über die innere Getriebeeingangswelle 3 übertragen. Die Kopplungsvorrichtungen S1, S2, S3 und S5 befinden sich in der Neutralstellung. Die Kopplungsvorrichtung S4 befindet sich in der linken, kupplungsfernen Schaltstellung. Der Leistungsfluss wird über die Zahnräder 8 und 18, sowie die Kopplungsvorrichtung S4 auf die zweite Triebwelle 6 übertragen.

Zur Schaltung des dritten Vorwärtsganges wird der Leistungsfluss über die äußere Getriebeeingangswelle 4 übertragen. Die Kopplungsvorrichtungen S1 und S3 befinden sich in der linken Schaltstellung, die Kopplungsvorrichtungen S2, S4 und S5 befinden sich in der Neutralstellung. Der Leistungsfluss wird über die Zahnradstufe mit den Zahnrädern 11 und 16 mittels der Kopplungsvorrichtung S1 auf die erste Triebwelle 5 übertragen.

Wenn der vierte Vorwärtsgang eingelegt ist, wird der Leistungsfluss über die innere Getriebeeingangswelle 3 übertragen. Die Kopplungsvorrichtungen S1 und S2 befinden sich in der linken Schaltstellung, die Kopplungsvorrichtungen S3, S4, S5 befinden sich in der Neutralstellung. Der Leistungsfluss wird über die Zahnradstufe mit den Zahnrädern 9 und 14 und die Kopplungsvorrichtungen S2 und S1 auf die Triebwelle 5 übertragen.

Wenn der fünfte Vorwärtsgang eingelegt ist, wird der Leistungsfluss über die äußere Getriebeeingangswelle 4 übertragen. Die Kopplungsvorrichtung S1 befindet sich in der linken Schaltstellung. Die Kopplungsvorrichtungen S2 und S4 befinden sich in der Neutralstellung. Die Kopplungsvorrichtungen S3 und S5 befinden sich in der rechten Schaltstellung. Der Leistungsfluss wird über die Getriebeeingangswelle 4, über die Kopplungsvorrichtung S3, die Zahnradstufe mit den Zahnrädern 12 und 21 (die dem siebten Vorwärtsgang zugeordnet ist), über die Kopplungsvorrichtung S5, auf die äußere Hohlwelle 24, die Zahnradstufe mit den Zahnrädern 19, 10 und 15, nämlich über die Doppelradebene 29 (die den Vorwärtsgängen acht und sechs zugeordnet ist) auf die Hohlwelle 22 sowie über die Kopplungsvorrichtung S1 auf die Triebwelle 5 übertragen.

Wenn der sechste Vorwärtsgang eingelegt ist, wird der Leistungsfluss über die innere Getriebeeingangswelle 3 übertragen. Die Kopplungsvorrichtung S1 befindet sich in der linken Schaltstellung und die Kopplungsvorrichtung S2 befindet sich in der rechten Schaltstellung. Die restlichen Kopplungsvorrichtungen S3, S4, S5 befinden sich in der Neutralstellung. Der Leistungsfluss wird über die Kopplungsvorrichtung S2 und die Zahnradstufe mit den Zahnrädern 15 und 10, die Hohlwelle 22, die Kopplungsvorrichtung S1 auf die Triebwelle 5 übertragen.

Wenn der siebte Vorwärtsgang eingelegt ist, wird der Leistungsfluss über die äußere Getriebeeingangswelle 4 übertragen. Die Kopplungsvorrichtungen S1, S2 und S5 befinden sich in der Neutralstellung. Die Kopplungsvorrichtungen S3 und S4 befinden sich in der rechten Schaltstellung. Der Leistungsfluss wird über die Kopplungsvorrichtung S3 auf die Zahnradstufe mit den Zahnrädern 12 und 21, auf die innere Hohlwelle 23 und über die Kopplungsvorrichtung S4 und auf die zweite Triebwelle 6 übertragen.

Wenn der achte Vorwärtsgang eingelegt ist, wird der Leistungsfluss über die innere Getriebeeingangswelle 3 übertragen. Die Kopplungsvorrichtungen S2, S4 und S5 befinden sich in der rechten Schaltstellung. Der Leistungsfluss wird von der inneren Getriebeeingangswelle 3 über die Kopplungsvorrichtung S2 auf die Zahnradstufe mit den Zahnrädern 10 und 19, die Hohlwelle 24, die Kopplungsvorrichtung S5 und damit auf die Hohlwelle 23, die Kopplungsvorrichtung S4 von da aus auf die Triebwelle 6 übertragen.

Wenn der neunte Vorwärtsgang eingelegt ist, wird der Leistungsfluss auf die äußere Getriebeeingangswelle 4 übertragen. Die Kopplungsvorrichtung S1 befindet sich in der rechten Schaltstellung und die restlichen Kopplungsvorrichtungen S2 bis S5 befinden sich in der Neutralstellung. Der Leistungsfluss wird ausgehend von der äußeren Getriebeeingangswelle 4 über die beiden Zahnräder 13 und 17 damit auf die Kopplungsvorrichtung S1 und damit auch auf die erste Triebwelle 5 übertragen.

Wenn der zehnte Vorwärtsgang eingelegt ist, wird der Leistungsfluss über die innere Getriebeeingangswelle 3 übertragen. Die Kopplungsvorrichtungen S1, S2, S3 und S5 befinden sich in der rechten Schaltstellung. Die Kopplungsvorrichtung S4 befindet sich in der Neutralstellung. Der Leistungsfluss wird über die Zahnradstufe mit den Zahnrädern 10 und 19 übertragen. Die derart angetriebene äußere Hohlwelle 24 ist über die Kopplungsvorrichtung S5 mit der inneren Hohlwelle 23 drehfest verbunden. Hierdurch wird die Zahnradstufe mit den beiden Zahnrädern 12 und 21 angetrieben. Weil die Kopplungsvorrichtung S3 das Zahnrad 12 mit der äußeren Getriebeeingangswelle 4 verbindet, wird nun ebenfalls das als Festrad ausgebildete Zahnrad 13 und somit das Zahnrad 17 auf der ersten Triebwelle 5 angetrieben. Über die Kopplungsvorrichtung S1 ist der Leistungsfluss zur Triebwelle 5 geschlossen.

Im folgenden darf auf Fig. 3 und damit auf das Doppelkupplungsgetriebe 2 näher eingegangen werden:
Das kupplungsferne Zahnrad 14 auf der ersten Triebwelle 5 weist eine nicht näher bezeichnete Aufnahme auf, die zu dem Lager 7 geöffnet ist. Das Zahnrad 14 umgreift dabei teilweise das Lager 7. Kupplungsnah neben dem Zahnrad 14, zwischen dem Zahnrad 15 und dem Zahnrad 14 ist ein Parksperrenrad 30 drehfest auf der ersten Triebwelle 5 angeordnet.

Das Zahnrad 15 ist über eine Hohlwelle 31 drehfest mit der Kopplungsvorrichtung S6 verbunden. Das Zahnrad 16 ist lose auf der Hohlwelle 31 zwischen der Kopplungsvorrichtung S6 und dem Zahnrad 15 angeordnet. Wird die Kopplungsvorrichtung S6 in die linke, kupplungsferne Schaltstellung verschoben, so wird das Zahnrad 16 drehfest mit der Hohlwelle 31 und dann mit dem Zahnrad 15 verbunden. Kupplungsnah der Kopplungsvorrichtung S6 ist ein Kupplungskörper 32 angeordnet. Wird die Kopplungsvorrichtung S6 in die rechte Schaltstellung, kupplungsnahe Schaltstellung bewegt, so wird die Hohlwelle 31 und damit das Zahnrad 15 drehfest mit der ersten Triebwelle 5 verbunden. Das Zahnrad 17 ist benachbart zum Kupplungskörper 32 kupplungsnah auf der Triebwelle 5 angeordnet. Benachbart kupplungsnah zum Zahnrad 17 ist das Abtriebsritzel a angeordnet.

Parallel zur Triebwelle 5 ist eine Zwischenwelle 33 angeordnet. Die Zwischenwelle 33 weist zwei Zahnräder 34, 35 auf. Die beiden Zahnräder 34, 35 sind drehfest auf der Zwischenwelle 33 angeordnet. Das Zahnrad 34 kämmt mit dem Zahnrad 16 auf der Hohlwelle 31. Das Zahnrad 35 kämmt mit dem Zahnrad 12 auf der äußeren Getriebeeingangswelle 4.

Im folgenden darf auf die Anordnung der Zahnräder 18, 19, 20, 21 auf der zweiten Triebwelle 6 des zweiten Doppelkupplungsgetriebes 2 näher eingegangen werden:
Das kupplungsferne Zahnrad 18 ist als Losrad ausgebildet. Die Kopplungsvorrichtung S1 ist drehfest mit einer Hohlwelle 36 verbunden. Wird nun die Kopplungsvorrichtung S1 in die linke, kupplungsferne Schalstellung bewegt, so wird das Zahnrad 18 drehfest mit der Hohlwelle 36 verbunden. Auf der Hohlwelle 36 ist das Losrad 19 benachbart zur Kopplungsvorrichtung S1 lose gelagert. Wird die Kopplungsvorrichtung S1 in die rechte, kupplungsnahe Schaltstellung bewegt, so wird das Zahnrad 19 drehfest mit der Hohlwelle 36 verbunden. Auf der Hohlwelle 36 ist drehfest das Zahnrad 20 angeordnet. Das Zahnrad 20 ist benachbart zum Zahnrad 19 kupplungsnah angeordnet. An einem nicht näher bezeichneten kupplungsnahen Endbereich der Hohlwelle 36 ist ein Kupplungskörper 37 drehfest angeordnet. Der Kupplungskörper 37 ist mit der Kopplungsvorrichtung S2 verbindbar. Die Kopplungsvorrichtung S2 ist drehfest mit der zweiten Triebwelle 6 verbunden. Kupplungsnah benachbart zu der Kopplungsvorrichtung S2 ist ein Festrad 21 auf der Triebwelle 6 angeordnet. Das Festrad 21 ist zwischen dem Abtriebsritzel b und der Kopplungsvorrichtung S2 angeordnet.

Das Doppelkupplungsgetriebe 2 weist genau eine Doppelradebene 38 auf, wobei die Doppelradebene 38 die drei als Losräder ausgebildeten Zahnräder 15, 10 und 19 aufweist. Das Doppelkupplungsgetriebe 2 weist insgesamt sechs Radebenen und genau die eine Doppelradebene 38 auf.

Mit dem Doppelkupplungsgetriebe 2 sind nun zehn Vorwärtsgänge schaltbar. Die Zahnradstufen mit den Zahnrädern 9 und 14 ist dabei dem zweiten Vorwärtsgang zugeordnet. Die Zahnradstufe mit den Zahnrädern 10 und 15 ist dem vierten Vorwärtsgang zugeordnet. Die Zahnradstufe mit den Zahnrädern 11 und 20 ist dem fünften Vorwärtsgang zugeordnet. Die Zahnradstufe mit den Zahnrädern 10 und 19 ist dem sechsten Vorwärtsgang zugeordnet. Die Zahnradstufe mit den Zahnrädern 12 und 17 ist dem siebten Vorwärtsgang zugeordnet. Die Zahnradstufe mit den Zahnrädern 8 und 18 ist dem achten Vorwärtsgang zugeordnet. Die Zahnradstufe mit den Zahnrädern 13 und 21 ist dem neunten Vorwärtsgang zugeordnet. Der erste, dritte und zehnte Vorwärtsgang sind jeweils als Windungsgang ausgebildet. Der Leistungsfluss windet sich bezüglich des ersten Vorwärtsganges über die Zahnradstufen der Vorwärtsgänge fünf, acht und zwei. Der dritte Vorwärtsgang ist ebenfalls als Windungsgang ausgebildet, wobei sich der Leistungsfluss über die Zahnradstufen der Vorwärtsgänge fünf, sechs und vier windet. Der zehnte Vorwärtsgang ist ebenfalls als Windungsgang ausgebildet, wobei sich der Leistungsfluss über die Zahnradstufen der Vorwärtsgänge sechs, fünf und neun windet.

Im folgenden darf auf die Schaltzustände der Kopplungsvorrichtungen S1, S2, S3, S4, S5, S6 bei der Schaltung der zehn Vorwärtsgänge und des Rückwärtsganges näher eingegangen werden (vgl. Fig. 3 und 4):
Zur Schaltung des Rückwärtsganges wird der Leistungsfluss über die innere Getriebeeingangswelle 3 übertragen. Die Kopplungsvorrichtung S1, S2, S3 und S5 befinden sich in der Neutralstellung. Die Kopplungsvorrichtung S4 befindet sich in der rechten, kupplungsnahen Schaltstellung. Die Kopplungsvorrichtung S6 befindet sich in der linken, kupplungsfernen Schaltstellung. Der Leistungsfluss erstreckt sich über die dem vierten Vorwärtsgang zugeordnete Zahnradstufe mit den Zahnrädern 10 und 15, die dem Rückwärtsgang zugeordnete Zahnradstufe mit den Zahnrädern 16 und 34 über die Zwischenwelle 33 sowie die Zahnradstufe mit den Zahnrädern 35, 12 und 17 (die dem siebten Vorwärtsgang zugeordnet ist), auf die erste Triebwelle 5. Der Rückwärtsgang ist dementsprechend als Windungsgang ausgebildet.

Wenn der erste Vorwärtsgang eingelegt ist, wird das Antriebsmoment über die äußere Getriebeeingangswelle 4 übertragen. Die Kopplungsvorrichtungen S1, S4 und S5 befinden sich in der linken Schaltstellung. Die Kopplungsvorrichtungen S2, S3 und S6 befinden sich in der Neutralstellung. Der Leistungsfluss wird ausgehend von der äußeren Getriebeeingangswelle 4 auf die Zahnradstufe des fünften Vorwärtsganges mit den Zahnrädern 11 und 20 übertragen. Die derart angetriebene Hohlwelle 36 überträgt den Leistungsfluss über die Kopplungsvorrichtung S1 auf die Zahnradstufe des achten Vorwärtsganges mit den Zahnrädern 8 und 18 auf die innere Getriebeeingangswelle 3. Über die geschlossene Kopplungsvorrichtung S4 wird der Leistungsfluss auf die dem zweiten Vorwärtsgang zugeordnete Zahnradstufe mit den Zahnrädern 9 und 14 und damit auf die Triebwelle 5 übertragen.

Wenn der zweite Vorwärtsgang eingelegt ist, wird der Leistungsfluss über die innere Getriebeeingangswelle 3 übertragen. Die Kopplungsvorrichtungen S1, S2, S3, S5 und S6 befinden sich in der Neutralstellung. Die Kopplungsvorrichtung S4 befindet sich in der linken Schaltstellung. Hierdurch wird der Leistungsfluss von der inneren Getriebeeingangswelle 3 über die Zahnräder 9 und 14 auf die erste Triebwelle 5 übertragen.

Wenn der dritte Vorwärtsgang eingelegt ist, wird der Leistungsfluss über die äußere Getriebeeingangswelle 4 übertragen. Die Kopplungsvorrichtungen S1 und S6 sind in der rechten Schaltstellung angeordnet. Die Kopplungsvorrichtungen S2, S3 und S4 sind in der Neutralstellung angeordnet. Die Kopplungsvorrichtung S5 ist in der linken Schaltstellung angeordnet. Hierdurch wird der Leistungsfluss von der äußeren Getriebeeingangswelle 4 über die Kopplungsvorrichtung S5 über die Zahnradstufe mit den Zahnrädern 11 und 20 des fünften Vorwärtsganges, die Hohlwelle 36, die Kopplungsvorrichtung S1, über die Doppelradebene 38 mit den Zahnrädern 19, 10 und 15 auf die Hohlwelle 31 und schließlich über die Kopplungsvorrichtung S6 auf die erste Triebwelle 5 übertragen.

Wenn nun der vierte Vorwärtsgang eingelegt ist, so wird der Leistungsfluss über die innere Getriebeeingangswelle 3 übertragen. Die Kopplungsvorrichtungen S1, S2, S3 und S5 sind in der Neutralstellung angeordnet. Die Kopplungsvorrichtungen S4 und S6 sind in der rechten, kupplungsnahen Schaltstellung angeordnet. Hierdurch wird der Leistungsfluss von der inneren Getriebeeingangswelle 3 über die Kopplungsvorrichtung S4 auf die Zahnradstufe mit den Zahnrädern 10 und 15, über die Hohlwelle 31 auf die Kopplungsvorrichtung S6 und von da aus auf den Kupplungskörper 32 und damit die Triebwelle 5 übertragen.

Wenn der fünfte Vorwärtsgang eingelegt ist, wird der Leistungsfluss über die äußere Getriebeeingangswelle 4 übertragen. Die Kopplungsvorrichtungen S1, S3, S4 und S6 befinden sich in der Neutralstellung. Die Kopplungsvorrichtungen S2 und S5 befinden sich in der linken, kupplungsfernen Schaltstellung. Der Leistungsfluss wird somit über die äußere Getriebeeingangswelle 4 auf die Zahnradstufe mit den Zahnrädern 11 und 20, die Kopplungsvorrichtung S2 und damit auf die zweite Triebwelle 6 übertragen.

Wenn der sechste Vorwärtsgang eingelegt ist, wird der Leistungsfluss über die innere Getriebeeingangswelle 3 übertragen. Die Kopplungsvorrichtungen S1 und S4 befinden sich in der rechten Schaltstellung. Die Kopplungsvorrichtung S2 befindet sich in der linken Schaltstellung. Die Kopplungsvorrichtungen S3, S5 und S6 befinden sich in der Neutralstellung. Der Leistungsfluss wird somit von der inneren Getriebeeingangswelle 3 über die Zahnradstufe mit den Zahnrädern 19 und 10 auf die Hohlwelle 36 und von da aus über die Kopplungsvorrichtung S2 auf die zweite Triebwelle 6 übertragen.

Wenn nun der siebte Vorwärtsgang eingelegt ist, befindet sich die Kopplungsvorrichtungen S1, S2, S3, S4 und S6 in der Neutralstellung. Die Kopplungsvorrichtung S5 ist in der rechten Schaltstellung angeordnet. Die dem siebten Vorwärtsgang zugeordnete Zahnradstufe mit den Zahnrädern 12 und 17 überträgt von dem Leistungsfluss ausgehend von der äußeren Getriebeeingangswelle 4 auf die erste Triebwelle 5.

Wenn der achte Vorwärtsgang eingelegt ist, sind die Kopplungsvorrichtungen S1 und S2 in der linken Schaltstellung angeordnet und die restlichen Kopplungsvorrichtungen S3 bis S6 in der Neutralstellung angeordnet. Der Leistungsfluss wird ausgehend von der inneren Getriebeeingangswelle 3 über die dem achten Vorwärtsgang zugeordnete Zahnradstufe mit den Zahnrädern 8 und 18 über die Kopplungsvorrichtung S1 auf die Hohlwelle 36 und von da aus über die Kopplungsvorrichtung S2 auf die zweite Triebwelle 6 übertragen.

Wenn der neunte Vorwärtsgang eingelegt ist, befindet sich die Kopplungsvorrichtung S3 in der linken Schaltstellung, die anderen Kopplungsvorrichtungen S1, S2, S4, S5, S6 befinden sich in der Neutralstellung. Der Leistungsfluss wird von der äußeren Getriebeeingangswelle 4 über die dem neunten Vorwärtsgang zugeordnete Zahnradstufe mit den Zahnrädern 13 und 21 auf die zweite Triebwelle 6 übertragen.

Wenn der zehnte Vorwärtsgang eingelegt wird, befinden sich die Kopplungsvorrichtungen S1 und S4 in der rechten Schaltstellung. Die Kopplungsvorrichtungen S3 und S5 befinden sich in der linken Schaltstellung. Die Kopplungsvorrichtungen S2 und S6 befinden sich in der Neutralstellung. Der Leistungsfluss wird von der inneren Getriebeeingangswelle 3 über die der sechsten Zahnradstufe zugeordneten Zahnrädern 10 und 19 auf die Hohlwelle 36 und damit auf die der fünften Zahnradstufe zugeordneten Zahnräder 20 und 11 übertragen. Über die Kopplungsvorrichtung S5 wird die äußere Getriebeeingangswelle 4 angetrieben und damit das über die Kopplungsvorrichtung S3 drehfest verbundene Zahnrad 13 und somit die dem neunten Vorwärtsgang zugeordnete Zahnradstufe mit den Zahnrädern 21 und 13 und somit dann die zweite Triebwelle 6 angetrieben.

Mindestens eine der Kopplungsvorrichtungen kann als eine Synchronisiervorrichtung realisiert werden

### Bezugszeichenliste

- 1: Doppelkupplungsgetriebe
- 2: Doppelkupplungsgetriebe
- 3: erste, innere Getriebeeingangswelle
- 4: zweite, äußere Getriebeeingangswelle
- 5: Triebwelle
- 6: Triebwelle
- 7: Lager
- 8: Zahnrad (erste Getriebeeingangswelle, kupplungsfern)
- 9: Zahnrad (erste Getriebeeingangswelle, mitte)
- 10: Zahnrad (erste Getriebeeingangswelle, kupplungsnah)
- 11: Zahnrad (zweite Getriebeeingangswelle, kupplungsfern)
- 12: Zahnrad (zweite Getriebeeingangswelle, mitte)
- 13: Zahnrad (zweite Getriebeeingangswelle, kupplungsnah)
- 14: Zahnrad (erste Triebwelle)
- 15: Zahnrad (erste Triebwelle)
- 16: Zahnrad (erste Triebwelle)
- 17: Zahnrad (erste Triebwelle)
- 18: Zahnrad (zweite Triebwelle)
- 19: Zahnrad (zweite Triebwelle)
- 20: Zahnrad (zweite Triebwelle)
- 21: Zahnrad (zweite Triebwelle)
- 22: Hohlwelle
- 23: Hohlwelle
- 24: Hohlwelle
- 25: Zwischenwelle
- 26: Zahnrad (Zwischenwelle)
- 27: Zahnrad (Zwischenwelle)
- 28: Parksperrenrad
- 29: Doppelradebene
- 30: Parksperrenrad
- 31: Hohlwelle
- 32: Kupplungskörper
- 33: Zwischenwelle
- 34: Zahnrad (Zwischenwelle)
- 35: Zahnrad (Zwischenwelle)
- 36: Hohlwelle
- 37: Kupplungskörper
- 38: Doppelradebene

- a: Abtriebsritzel
- b: Abtriebsritzel

- S1: Kopplungsvorrichtung
- S2: Kopplungsvorrichtung
- S3: Kopplungsvorrichtung
- S4: Kopplungsvorrichtung
- S5: Kopplungsvorrichtung
- S6: Kopplungsvorrichtung

## Patentansprüche

1. Doppelkupplungsgetriebe (1, 2) für ein Kraftfahrzeug mit einer ersten Getriebeeingangswelle (3), mit einer zweiten Getriebeeingangswelle (4), mit zwei Triebwellen (5, 6), mit mehreren Zahnrädern (8 bis 21), mit mehreren Kopplungsvorrichtungen (S1, S2, S3, S4, S5, S6), wobei die erste Getriebeeingangswelle (3) über eine erste Reibkupplung und die zweite Getriebeeingangswelle (4) über eine zweite Reibkupplung mit einem Antriebsmotor verbindbar oder verbunden ist, wobei die Zahnräder (8 bis 21) derart kämmend angeordnet sind, dass mehrere Vorwärtsgänge mittels der Kopplungsvorrichtungen (S1 bis S6) schaltbar sind, wobei mindestens ein Vorwärtsgang als Windungsgang ausgebildet ist, und wobei sich ein Leistungsfluss des Windungsganges über mehrere Zahnradstufen windet, wobei genau eine Doppelradebene (29, 38) mit drei als Losrädern ausgebildeten Zahnrädern (10, 15, 19) vorgesehen ist und den beiden Triebwellen (5, 6) jeweils mindestens eine Hohlwelle (22, 23, 24; 31, 36) zugeordnet ist, und wobei auf mindestens einer der Hohlwellen (24, 31, 36) mindestens ein als Losrad ausgebildetes Zahnrad (20, 16, 19) lose angeordnet ist und auf einer der Triebwellen (6) zwei koaxial angeordnete Hohlwellen (23, 24) angeordnet sind, wobei die innere Hohlwelle (23) ein drehfestes Zahnrad (21) aufweist und über eine Kopplungsvorrichtung (S4) mit der Triebwelle (6) drehfest verbindbar ist, wobei die äußere Hohlwelle (24) ein drehfestes Zahnrad (19) aufweist, **dadurch gekennzeichnet, dass** auf der äußeren Hohlwelle (24) ein als Losrad ausgebildetes Zahnrad (20) angeordnet ist, wobei dieses Zahnrad (20) über eine weitere Kopplungsvorrichtung (S5) drehfest mit der äußeren Hohlwelle verbindbar ist, und wobei die beiden Hohlwellen (23, 24) über die weitere Kopplungsvorrichtung (S5) drehfest miteinander verbindbar sind.

2. Doppelkupplungsgetriebe nach Anspruch 1, **dadurch gekennzeichnet, dass** der Leistungsfluss mindestens eines Windungsganges sich über die Doppelradebene (29, 38) windet.

3. Doppelkupplungsgetriebe nach einem der vorstehenden Ansprüche, **dadurch gekennzeichnet, dass** jeder der Getriebeeingangswellen (3, 4) mindestens ein als Losrad ausgebildetes Zahnrad (9, 10, 11, 12; 9, 10, 11, 12, 13) und jeweils mindestens eine Kopplungsvorrichtung (S2, S3; S4, S5) zur Verbindung der Losräder mit der entsprechenden Getriebeeingangswelle (3, 4) zugeordnet ist.

4. Doppelkupplungsgetriebe nach einem der vorstehenden Ansprüche, **dadurch gekennzeichnet, dass** zur Realisierung eines Rückwärtsganges eine Zwischenwelle (25, 33) mit einem Zahnrad (26, 34) vorgesehen ist, wobei dieses Zahnrad (26, 34) mit einem der Zahnräder auf einer der Triebwellen (5, 6) kämmend angeordnet ist.

5. Doppelkupplungsgetriebe nach einem der vorstehenden Ansprüche, **dadurch gekennzeichnet, dass** jeder der Triebwellen (5, 6) ein Abtriebsritzel (a, b) zugeordnet ist, wobei die Abtriebsritzel (a, b) unterschiedliche Größen aufweisen.

6. Doppelkupplungsgetriebe nach einem der vorstehenden Ansprüche, **dadurch gekennzeichnet, dass** zehn Vorwärtsgänge vorgesehen sind, wobei zumindest der erste und der zehnte Vorwärtsgang und insbesondere ein weiterer Vorwärtsgang als Windungsgang ausgebildet sind.

## Claims

1. A dual clutch transmission (1, 2) for a motor vehicle with a first transmission input shaft (3), with a second transmission input shaft (4), with two drive shafts (5, 6), with several gear wheels (8 to 21), with several coupling devices (S1, S2, S3, S4, S5, S6), wherein the first transmission input shaft (3) is connectable or connected via a first friction clutch and the second transmission input shaft (4) is connectable or connected via a second friction clutch to a drive motor, wherein the gear wheels (8 to 21) are arranged in such a meshing manner that several forward gears are engageable by means of the coupling devices (S1 to S6), wherein at least one forward gear is configured as a winding gear and wherein a power flow of the winding gear winds over several gear stages, wherein precisely one sliding gear wheel stage (29, 38) is provided with three gear wheels (10, 15, 19) configured as idler wheels and at least one hollow shaft (22, 23, 24; 31, 36) is assigned to the two drive shafts (5, 6) and wherein on at least one of the hollow shafts (24, 31, 36) at least on gear wheel(20, 16, 19) configured as an idler wheel is arranged idly and on one of the drive shafts (6) two coaxially arranged hollow shafts (23, 24) are arranged, wherein the inner hollow shaft (23) has a non-rotatable gear wheel (21) and is non rotatably connectable via a coupling device (S4) to the drive shaft (6), wherein the outer hollow shaft (24) has a non-rotatable gear wheel (19), **characterized in that** on the outer hollow shaft (24) a gear wheel (20) configured as an idler wheel is arranged, wherein this gear wheel (20) is connectable non-rotatably via a further coupling device (S5) to the outer hollow shaft, and wherein the two hollow shafts (23, 24) are connectable non rotatably to one another via the further coupling device (S5).

2. The dual clutch transmission according to claim 1 **characterized in that** the power flow of at least one winding gear winds over the sliding gear wheel stage(29, 38).

3. The dual clutch transmission according to one of the preceding claims, **characterized in that** at least one gear wheel (9, 10, 11, 12; 9, 10, 11, 12, 13) configured as an idler wheel and at least one coupling device (S2, S3; S4, S5) for connecting the idler wheels to the corresponding transmission input shaft (3, 4) is assigned to each of the transmission input shafts (3, 4).

4. The dual clutch transmission according to one of the preceding claims, **characterized in that** for making a reverse gear, an intermediate shaft (25, 33) with a gear wheel (26, 34) is provided, wherein this gear wheel (26, 34) is arranged in a meshing manner with one of the gear wheels on one of the drive shafts(5, 6) .

5. The dual clutch transmission according to one of the preceding claims, **characterized in that** a drive pinion (a, b) is assigned to each of the drive shafts (5, 6), wherein the drive pinions (a, b) have different sizes.

6. The dual clutch transmission according to one of the preceding claims, **characterized in that** ten forward gears are provided, wherein at least the first and the tenth forward gear and particularly a further forward gear are configured as winding gears.

## Revendications

1. Transmission à double embrayage (1, 2) pour un véhicule automobile avec un premier arbre d'entrée de transmission (3), avec un deuxième arbre d'entrée de transmission (4), avec deux arbres d'entraînement (5, 6), avec plusieurs roues dentées (8 à 21), avec plusieurs dispositifs de couplage (S1, S2, S3, S4, S5, S6), dans laquelle le premier arbre d'entrée de transmission (3) peut être relié ou est relié par un premier embrayage à friction et le deuxième arbre d'entrée de transmission (4) peut être relié ou est relié par un deuxième embrayage à friction avec un moteur d'entraînement, dans laquelle les roues dentées (8 à 21) sont agencées de façon à s'engrener, de sorte que plusieurs rapports de marche avant sont commutables au moyen des dispositifs de couplage (S1 à S6), dans laquelle au moins un rapport de marche avant est réalisé sous forme d'engrenage à enroulement, et dans laquelle un flux de puissance de l'engrenage à enroulement s'enroule sur plusieurs étages d'engrenage, dans laquelle exactement un plan de roue double (29, 38) est prévu avec trois roues dentées réalisées sous la forme de roues folles (10, 15, 19) et au moins un arbre creux (22, 23, 24; 31, 36) est associé respectivement aux deux arbres d'entraînement (5, 6) et dans laquelle au moins une roue dentée réalisée sous forme d'une rolle folle (20, 16, 19) est agencée de manière lâche sur au moins l'un des arbres creux (24, 31, 36) et deux arbres creux agencés de manière coaxiale (23, 24) sont agencés sur l'un des arbres d'entraînement (6), dans laquelle l'arbre creux intérieur (23) comporte une roue dentée solidaire en rotation (21) et peut être relié de manière solidaire en rotation par le dispositif de couplage (S4) avec l'arbre d'entraînement (6), dans laquelle l'arbre creux extérieur (24) comporte une roue dentée solidaire en rotation (19), **caractérisée en ce qu'**une roue dentée réalisée sous forme de roue folle (20) est agencée sur l'arbre creux extérieur (24), ladite roue dentée (20) pouvant être reliée de manière solidaire en rotation par un autre dispositif de couplage (S5) avec l'arbre creux extérieur et les deux arbres creux (23, 24) pouvant être reliés l'un à l'autre de manière solidaire en rotation par un autre dispositif de couplage (S5).

2. Transmission à double embrayage selon la revendication 1, **caractérisée en ce que** le flux de puissance d'au moins un engrenage à enroulement s'enroule sur le plan de roue double (29, 38).

3. Transmission à double embrayage selon l'une des revendications précédentes, **caractérisée en ce qu'**au moins une roue dentée réalisée sous forme de roue folle (9, 10, 11, 12; 9, 10, 11, 12, 13) et respectivement au moins un dispositif de couplage (S2, S3; S4, S5) sont associés à chacun des arbres d'entrée de transmission (3, 4) pour la liaison des roues folles avec l'arbre d'entrée de transmission correspondant (3, 4).

4. Transmission à double embrayage selon l'une des revendications précédentes, **caractérisée en ce qu'**un arbre intermédiaire (25, 33) avec une roue dentée (26, 34) est prévu pour la réalisation d'un rapport de marche arrière, dans laquelle ladite roue dentée (26, 34) est agencée de façon à s'engrener avec l'une des roues dentées sur l'un des arbres d'entraînement (5, 6) .

5. Transmission à double embrayage selon l'une des revendications précédentes, **caractérisée en ce qu'**un pignon à la sortie (a, b) est associé à chacun des arbres d'entraînement (5, 6), les pignons à la sortie (a, b) présentant des dimensions différentes.

6. Transmission à double embrayage selon l'une des revendications précédentes, **caractérisée en ce que** dix rapports de marche avant sont prévus, au moins le premier et le dixième rapport de marche avant et, en particulier, un autre rapport de marche avant étant conçus sous forme d'un engrenage à enroulement.
